**Europäisches Patentamt**

**European Patent Office**

**Office européen des brevets**

(11) Veröffentlichungsnummer: **0 199 976**
**B1**

(12) **EUROPÄISCHE PATENTSCHRIFT**

(45) Veröffentlichungstag der Patentschrift:
31.05.89

(21) Anmeldenummer: 86103885.9

(22) Anmeldetag: 21.03.86

(51) Int. Cl.⁴: **G02B 19/00**, G06K 7/10,
B07C 3/14

(54) Beleuchtungseinrichtung für automatisches Lesen.

(30) Priorität: 18.04.85 DE 3514014

(43) Veröffentlichungstag der Anmeldung:
10.12.86 Patentblatt 86/45

(45) Bekanntmachung des Hinweises auf die Patenterteilung:
31.05.89 Patentblatt 89/22

(84) Benannte Vertragsstaaten:
DE FR GB IT

(56) Entgegenhaltungen:
EP-A- 0 036 149
DE-B- 1 117 319
DE-B- 1 247 052
FR-A- 1 296 899
FR-A- 1 405 314
GB-A- 1 181 006
US-A- 3 457 401

(73) Patentinhaber: **Licentia Patent-Verwaltungs-GmbH,
Theodor-Stern-Kai 1, D-6000 Frankfurt/Main 70(DE)**

(72) Erfinder: **Stamm, Peter, Dipl.-Ing., Kasernenstrasse 11,
D-7760 Radolfzell(DE)**

(74) Vertreter: **Schulze, Harald Rudolf, Dipl.-Ing. et al,
Licentia Patent-Verwaltungs-GmbH
Theodor-Stern-Kai 1, D-6000 Frankfurt/Main 70(DE)**

## Beschreibung

Die Erfindung bezieht sich auf eine Beleuchtungseinrichtung gemäß dem Oberbegriff des Patentanspruchs 1.

Bei einer bekannten Einrichtung dieser Art werden die Sendungen während ihres Transports durch die Lesezone unter jeweils etwa 45° zur Normalen mittels jeweils getrennter Leuchten und zugehöriger optischer Linsen linienförmig beleuchtet. Unter 0°, also in Richtung der Normalen, befindet sich der Empfangsstrahlengang der Leseeinrichtung, die eingangsseitig einen Fotoempfänger in Form einer Fotodiodenzeile aufweist.

Bei einer aus der EP 0 036 149 bekannten Vorrichtung erfolgt eine Beleuchtung derselben Fläche des Trägers mittels mindestens zwei elektromagnetischen Strahlungsbündel, die von einer einzigen Strahlungsquelle erzeugt werden. Hierfür sind bei der bekannten Vorrichtung eine Lampe, sowie lediglich ein Reflektor und zwei Kondensorsysteme vorgesehen, so daß keine optimale Ausnutzung der von der Lampe emittierten Strahlung möglich ist. Bei einer aus der DE-AS 117 319 bekannten Einrichtung erfolgt zwar eine Mehrfachausnutzung der Lampenleistung durch ein Reflektorsystem. Allerdings ist gemäß dieser Auslegeschrift eine direkte Beleuchtung des Beleuchtungsobjektes vorgesehen, mit der Folge eines erhöhten Raumbedarf in Richtung der direkten Beleuchtung sowie einer reduzierten Variabilität bei der Positionierung des Beleuchtungsobjektes.

Der Erfindung liegt die Aufgabe zugrunde, diese bekannten Einrichtungen einerseits hinsichtlich des Konstruktions- und Betriebsaufwands und andererseits hinsichtlich ihres Raumbedarfs zu verkleinern, ohne daß die Beleuchtungsstärke in der Lesezone wesentlich absinkt.

Die erfindungsgemäße Lösung dieser Aufgabe ist dem kennzeichnenden Teil des Patentanspruchs 1 entnehmbar. Die Unteransprüche beinhalten die Merkmale vorteilhafter Weiterbildungen der Erfindung.

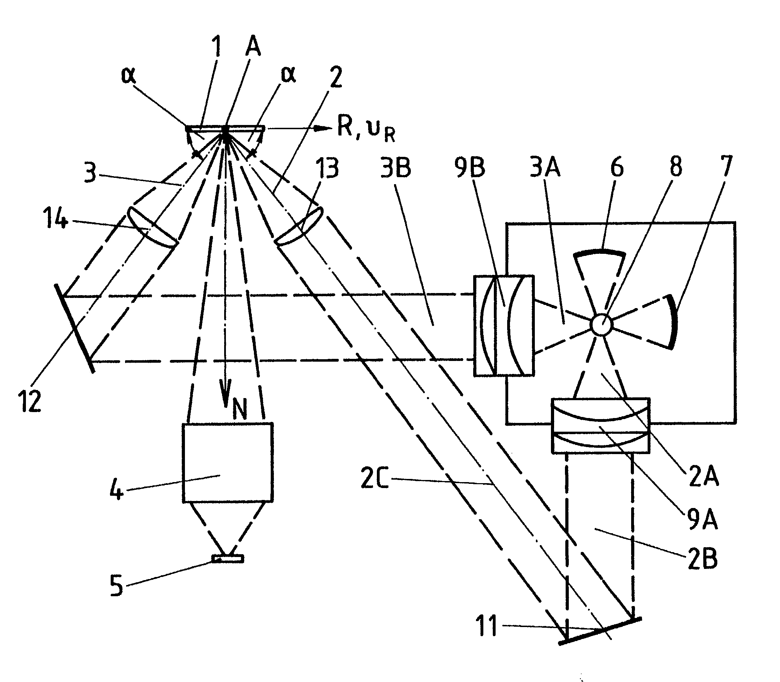

Anhand der Figur wird im folgenden ein besonders zweckmäßiges Ausführungsbeispiel der Erfindung und ihrer Weiterbildungen näher beschrieben.

Die Figur zeigt wegen der Übersichtlichkeit keine maßstabsgetreue Draufsicht des Ausführungsbeispiels.

Zum automatischen Lesen, beispielsweise die Beschriftung eines kuvertierten Briefes, in der Figur als Träger 1 bezeichnet, besitzt die Beleuchtungseinrichtung vorzugsweise zwei getrennte, mit hoher Strahlungsintensität versehene Strahlungsbündel 2, 3, die beispielsweise die im Anschriftenfeld gelegene Postleitzahl, Bestimmungsort, Adresse beleuchten. Mittels eines mit einem Objektiv 4 ausgestatteten optischen Detektors 5, der vorzugsweise in Richtung der Normalen N zum Träger 1 angeordnet ist, wird die Beschriftung des Briefes gelesen.

Um eine für den Detektor 5 ausreichende Beleuchtungsstärke zu erhalten wurden bisher für die Erzeugung zweier Strahlungsbündel eine entsprechende Anzahl von Strahlungsquellen eingesetzt.

Um eine Strahlungsquelle (das heißt, beispielsweise Lampengehäuse, Lampenvorschaltgerät und Lampe) einsparen und damit auch den Raumbedarf verringern zu können, werden in vorteilhafter Weise zwei Spiegel 6, 7 eingesetzt, die um eine Strahlungsquelle 8 angeordnet sind. Die von der Strahlungsquelle 8 abgestrahlte Strahlung wird an den Spiegeln 6, 7 bevorzugt so reflektiert, daß zwei sich aus dem reflektierten Teil und dem von der Strahlungsquelle 8 direkt gelieferten Teil zusammensetzenden Strahlungsbündel 2A, 3A entstehen.

Um eine ausreichende Trennung der Strahlungsbündel 2A, 3A und eine einfache Justage der nachgeordneten Optik zu erzielen, ist eine 90°-Anordnung der Spiegel 6, 7 zu bevozugen (siehe Figur). Geeignet ist hierbei die Anordnung der Spiegel auf einem Kreisbogen, insbesondere wenn die Strahlungsquelle 8 eine rotationssymmetrische Abstrahlungscharakteristik besitzt; wobei im dazugehörigen Kreismittelpunkt die Strahlungsquelle 8 möglichst anzuordnen ist. Damit die Strahlungsbündel eine gleichmäßige und eine in einfacher Weise zu erreichende Ausleuchtung des Trägers 1 erlauben, ist zumindest eine um die Vertikalachse der Strahlungsquelle 8 rotationssymmetrische Strahlungsquelle, eine zu dieser Vertikalachse auf einem Kreisbogen liegende Anordung der Spiegel 6, 7 sowie eine Anordnung in der die Strahlungsquelle 8 mit den Spiegelmittelpunkten in einer gemeinsamen Ebene liegen, zu wählen.

Weiterhin sollte die Strahlungsquelle 8 möglichst auf der Verbindungslinie von Spiegelbrennpunkt-Scheitelpunkt liegen.

Generell ist natürlich möglich weitere Strahlenbündel mittels weiterer Spiegel zu erzeugen, um den Lichtstrom der Strahlungsquelle 8 noch besser ausnutzen zu können.

Wie in der Figur gezeigt, werden die zwei erzeugten Strahlungsbündel 2A, 3A auf ihrem Weg zum zu beleuchtenden Träger 1 zuerst durch ein als Kondensor arbeitendes Linsensystem 9A, 9B geschickt, das vorzugweise einen quasiparallelen Strahlengang des jeweiligen Strahlungsbündels 2A, 3A erzeugt. Um zu erreichen, daß die Ausbreitungsrichtung der Strahlung beider Strahlungsbündel einerseits in einer Ebene erfolgt (Strahlachsen der Bündel liegen in einer Ebene) und somit gleiche Beleuchtungsverhältnisse auf dem Träger sowie gleiche Reflexionsverhältnisse für den optischen Empfänger erzeugen, werden in vorteilhafter Weise beide Strahlungsbündel 2A, 3A, z. B. mittels eines aus reflektierenden und fokussierenden Mitteln sich zusammensetzenden optischen Systems, unter einem gleichen vorgegebenen Einfallswinkel α den Träger 1, das heißt also die zu lesenden Briefe, beleuchten.

Die reflektierende Mittel können im einfachsten Fall Planspiegel 11, 12 sein, die die einfallenden quasi-parallele Strahlungen 2B, 3B so reflektieren, daß die gewünschte Einfallsrichtung der Strahlungen auf den Träger 1 vorzugsweise unter dem Winkel α von 45° durch die Umlenkung er reicht wird.

Dies bedeutet, daß das umgelenkte Strahlungsbündel 2C, den nicht umgelenkten Teil des Strahlungsbündels 3B, also vor seiner Umlenkung, ungestört durchdringt und direkt in Richtung des zu beleuchtenden Briefes sich ausbreitet.

Bei der Wahl gleicher Einfallswinkel kann der Beitrag der beiden Strahlungsbündel 2, 3 zur Gesamtintensität am Fotoempfänger 5 je zur Hälfte aufgeteilt werden.

Während des Lesevorganges wird der Brief 1 vorzugsweise immer in eine Richtung R weitertransportiert, bei der die horizontal verlaufenden Strahlachsen der auftreffenden Strahlungsbündel 2, 3 mit der Oberflächennormalen N des Briefes stets denselben Winkel, vorzugsweise 45°, bilden. Damit eine möglichst hohe Beleuchtungsstärke erreicht wird, sollen die Auftreffpunkte A der beiden Strahlenachsen zusammenfallen, so daß beide Strahlungsbündel dieselbe Fläche des Briefes beleuchten.

Für den Lesevorgang reicht eine einfache lineare Fotodiodenanordnung als optischer Empfänger 5 aus, wenn vorzugsweise die Beleuchtungsfläche linienförmig gewählt wird, die vorzugsweise so angeordnet .ist, daß die Längsrichtung der Beleuchtungsfläche parallel zur Fotodiodenzeile und senkrecht zur Transportrichtung R der auf ihrer Längskante liegenden Briefe sowie senkrecht zu den Strahlachsen der Strahlungsbündel 2, 3 liegt.

Eine linienförmige Fokussierung der Strahlungsbündel 2, 3 auf den Träger wird mittels eines zylinderförmigen Linsensystems 13, 14 direkt vor dem Träger im Abstand der Brennweite des Linsensystems erreicht.

Zur Erkennung von Zeichen mittels einer Fotodiodenzeile (Detektor 5) ist die Breite der linienförmigen Ausleuchtung wesentlich kleiner als das schmalste auftretende Zeichen zu wählen. Die zu wählende Höhe hängt von der Höhe des zu lesenden Anschriftenfeldes ab. Somit können mittels eines schnellen Abtastverfahrens, bei dem sich nur die abzutastende Fläche (Brief) bewegt, die erkennbaren Zeichen (Markierungen) gelesen werden. Die Abtastfrequenz ist derart hoch zu wählen, daß ein zu erkennendes Zeichen ausreichend oft während seines Transports an mehreren Stellen horizontal (spaltenförmig) abgetastet wird. Durch Zerlegung des Bildes in schmale spaltenförmige Bildausschnitte, kann das zweidimensionale Anschriftenfeld mittels eines eindimensional arbeitenden elektro-optischen Empfängers gelesen werden.

Je höher die Transportgeschwindigkeit $V_R$ des Briefes 1 ist, desto höher muß auch die Abtastfrequenz gewählt werden. Ein Zeichen sollte beispielsweise 5 - 10 mal über seine Breite hinweg abgetastet werden.

Ist eine punktförmige Fokussierung gewünscht, weil beispielsweise ein Balken-Code zu lesen ist, so sind entsprechend die Linsensysteme 13, 14 parabolisch oder auch, wenn ausreichend sphärisch auszubilden.

Bei der Wahl der Strahlungsquelle 8 kann auf übliche Lampen wie beispielsweise Höchstdruckentladungslampen zurückgegriffen werden. Generell ist natürlich auch eine monochromatische im sichtbaren Bereich, im Infrarot-, UV- oder auch mm-Bereich arbeitende Quelle hierzu geeignet, vor allem dann, wenn störendes Hintergrundlicht vorhanden ist. Der Empfänger 5 ist dementsprechend auszuwählen.

## Patentansprüche

1. Beleuchtungseinrichtung für automatisches Lesen von auf einem Träger optisch erkennbarer Markierungen insbesondere alphanumerische Zeichen auf Sendungen, beispielsweise Briefe, Postkarten, Scheckkarten, Belege und dergleichen, bestehend aus

1.1 einer einzigen Strahlungsquelle (8), 2.1 einem ersten gekrümmten Spiegel (6), der auf einer Seite der Strahlungsquelle angeordnet ist und von der Strahlungsquelle emittierte Strahlung durch diese Strahlungsquelle hindurch reflektiert und ein erstes Strahlungsbündel erzeugt,

2.2 einem zweiten gekrümmten Spiegel (7), der bezogen auf die Strahlungsquelle gegenüber dem ersten Spiegel in einer um 90 Grad versetzten Position angeordnet ist und von der Strahlungsquelle emittierte Strahlung durch diese Strahlungsquelle hindurch reflektiert und ein zweites Strahlungsbündel erzeugt.

2.3 wobei die Spiegel (6), (7) auf einem Kreisbogen angeordnet sind und die Strahlungsquelle (8) im dazu gehörigen Kreismittelpunkt angeordnet ist,

3.1 einem ersten Kondensorsystem (9A), das gegenüber dem ersten Spiegel angeordnet ist und aus dem ersten Strahlungsbündel ein quasi-paralleles Strahlungsbündel (2B) erzeugt,

3.2 einem zweiten Kondensorsystem (9B), das gegenüber dem zweiten Spiegel angeordnet ist und aus dem zweiten Strahlungsbündel ein quasi-paralleles Strahlungsbündel (3B) erzeugt,

4.1 einem ersten Planspiegel (11), der das erste quasi-parallele Strahlungsbündel in Richtung des besagten Trägers reflektiert,

4.2 einem zweiten Planspiegel (12), der das zweite quasi-parallele Strahlungsbündel in Richtung des besagten Trägers reflektiert,

5.1 zwei ausgangsseitigen Linsensystemen (13, 14) zur Fokussierung der beiden quasi-parallelen Strahlungsbündel auf dieselbe Fläche besagten Trägers,

5.2 wobei die Achsen der reflektierten und fokussierten Strahlungsbündel so gewählt sind, daß sie mit der Oberflächennormale der beleuchteten Fläche besagten Trägers den gleichen Winkel ($\alpha$) bilden und

6.1 einem optischen Detektor (5), der in Richtung der besagten Oberflächennormale (N) angeordnet ist,

6.2 wobei sich die besagten quasi-parallelen Strahlungsbündel (20, 30) schneiden und symmetrisch zum optischen Detektor (5) auf den Träger (1) einfallen, während die Strahlungsquelle (8) und die Kondensorsysteme (9A, 9B) unsymmetrisch zum Träger angeordnet sind.

2. Beleuchtungseinrichtung nach Anspruch 1, dadurch gekennzeichnet, daß sämtliche quasi-parallelen Strahlungsbündel in einer Ebene liegen, die die besagte Oberflächennormale enthält.

3. Beleuchtungseinrichtung nach einem der Ansprüche 1 bis 2, dadurch gekennzeichnet, daß die ausgangsseitigen Linsensysteme zylindrische Linsensysteme (13, 14) zur linienförmigen Fokussierung der Strahlungsbündel auf den Träger enthalten.

4. Beleuchtungseinrichtung nach Anspruch 1 bis 3, dadurch gekennzeichnet, daß die ausgangsseitigen Linsensysteme sphärische Linsensysteme zur punktförmigen Fokussierung der Strahlungsbündel enthalten.

5. Beleuchtungseinrichtung nach einem der Ansprüche 1 bis 4, dadurch gekennzeichnet, daß die Strahlungsquelle (8) in Form einer elektrischen Lampe ausgebildet ist.

6. Beleuchtungseinrichtung nach Anspruch 5, dadurch gekennzeichnet, daß die elektrische Lampe eine Höchstdruckentladungslampe ist.

7. Beleuchtungseinrichtung nach einem der Ansprüche 1 bis 6, dadurch gekennzeichnet, daß die auf die Träger gerichtete Strahlung monochromatisch ist.

## Claims

1. Illuminating equipment, for automatic reading of optically recognisable markings on a carrier, in particular for alpha-numeric symbols on consignments, for example letters, postcards, cheque cards, documents and the like consisting of
1.1 a single radiation source (8),
2.1 a first curved mirror (6), which is arranged on one side of the radiation source and reflects radiation emitted by the radiation source therethrough and produces a first shaft of rays,
2.2 a second curved mirror (7), which referred to the radiation source is arranged in position displaced through 90 degrees relative to the first mirror and reflects radiation emitted by the radiation source therethrough and produces a second shaft of rays,
2.3 wherein the mirrors (6, 7) are arranged on a circular arc and the radiation source (8) is arranged in the centre of the circle belonging thereto,
3.1 a first condenser system (9A), which is arranged opposite the first mirror and produces a quasi-parallel shaft of rays (2B) from the first shaft of rays,
3.2 a second condenser system (9B), which is arranged opposite the second mirror and produces a quasi-parallel shaft of rays (3B) from the second shaft of rays,
4.1 a first planar mirror (11), which reflects the first quasi-parallel shaft of rays in the direction of the said carrier,
4.2 a second planar mirror (12), which reflects the second quasi-parallel shaft of rays in the direction of the said carrier,
5.1 two lens systems (13, 14) at the exit for focussing both the quasi-parallel shafts of rays on the same area of said carrier,
5.2 wherein the axes of the reflected and focussed shafts of rays are so chosen that they form the same angle (α) with the surface normal of the illuminated area of said carrier,
6.1 an optical detector (5), which is arranged in the direction of the said surface normal (N),
6.2 wherein the said quasi-parallel shafts of rays (20, 30) intersect and are incident on the carrier (1) symmetrically with the optical detector (5), whilst the radiation source (8) and the condenser systems (9A, 9B) are arranged asymmetrically of the carrier.

2. Illuminating equipment according to claim 1, characterised therby, that all quasi-parallel shafts of rays lie in one plane which contains the said surface normal.

3. Illuminating equipment according to one of the claims 1 to 2, characterised thereby, that the lens systems at the exit contain cylindrical lens systems (13, 14) for the line-shaped focussing of the shafts of rays onto the carrier.

4. Illuminating equipment according to one of the claims 1 to 3, characterised thereby, that the lens systems at the exit contain spherical lens systems for the punctiform focussing of the shafts of rays.

5. Illuminating equipment according to one of the claims 1 to 4, characterised thereby, that the radiation source (8) is constructed in the form of an electric lamp.

6. Illuminating equipment according to claim 5, characterised thereby, that the electric lamp is a vapour discharge lamp.

7. Illuminating equipment according to one of the claims 1 to 6, characterised thereby, that the radiation directed onto the carriers is monochromatic.

## Revendications

1. Dispositif d'éclairement pour lecture automatique de marques, reconnaissables optiquement sur un support, en particulier de caractères alphanumériques sur des colis, par exemple des lettres, des cartes-postales, des cartes-chèques, des documents et analogues, comportant:
1.1 Une unique source d'éclairement (8),
2.1 Un premier miroir courbe (6) qui est disposé d'un côté de la source de rayonnement et qui réfléchit à travers cette source de rayonnement le rayonnement émis par la source de rayonnement, et produit un premier faisceau de rayonnement.
2.2 un second miroir courbe (7) qui est disposé par rapport au premier miroir dans une position décalée de 90° compté sur la source de rayonnement, et qui réfléchit à travers cette source de rayonnement le rayonnement émis par la source de rayonnement et produit un second faisceau de rayonnement.
2.3 étant précisé que les miroirs (6), (7) sont disposés sur un arc de cercle et que la source de rayonnement (8) est disposée au centre du cercle correspondant.
3.1 un premier système de condenseur (9A) qui est disposé en face du premier miroir et qui, à partir du premier faisceau de rayonnement, produit un faisceau de rayonnement quasi-parallèle (2B),

3.2 un second système de condenseur (9B) qui est disposé en face du second miroir et qui, à partir du second faisceau de rayonnement, produit un faisceau de rayonnement quasi parallèle (3B), 4.1 un premier miroir plan (11) qui réfléchit le premier faisceau de rayonnement quasi-parallèle en direction dudit support,

4.2 un second miroir plan (12) qui réfléchit le second faisceau de rayonnement quasi-parallèle en direction dudit support,

5.1 deux systèmes de lentilles (13, 14) côté sortie, pour focaliser les deux faisceaux de rayonnement quasi-parallèles sur la même surface dudit support,

5.2 étant précisé que les axes des faisceaux de rayonnement réfléchis et focalisés sont choisis de façon à former le même angle ($\alpha$) avec la norme à la surface éclairée dudit support et

6.1 un détecteur optique (5) qui est disposé dans la direction de ladite normale (N) à la surface.

6.2 étant précisé que lesdits faisceaux de rayonnement quasi-parallèles (20, 30) s'intersectent et tombent symétriquement par rapport au détecteur optique (5) sur le support (1), tandis que la source de rayonnement (8) et les systèmes de condenseur (9A, 9B) sont disposés non symétriquement par rapport au support.

2. Dispositif d'éclairement selon la revendication 1, caractérisé en ce que tous les faisceaux de rayonnement quasi-parallèles sont situés dans un même plan qui contient ladite normale à la surface.

3. Dispositif d'éclairement selon l'une des revendications 1 à 2, caractérisé en ce que les systèmes de lentilles côté sortie contiennent des systèmes de lentilles cylindriques (13, 14) pour focaliser linéairement les faisceaux de rayonnement sur le support.

4. Dispositif d'éclairement selon les revendications 1 à 3 caractérisé en ce que les systèmes de lentilles côté sortie contiennent des systèmes de lentilles sphériques pour focaliser ponctuellement les faisceaux de rayonnement.

5. Dispositif d'éclairement selon l'une des revendications 1 à 4, caractérisé en ce que la source de rayonnement (8) est conçue sous forme d'une lampe électrique.

6. Dispositif d'éclairement selon la revendication 5, caractérisé en ce que la lampe électrique est une lampe à décharge sous haute pression.

7. Dispositif d'éclairement selon l'une des revendications 1 à 6, caractérisé en ce que le rayonnement dirigé sur le support est monochromatique.